# EUROPÄISCHE PATENTANMELDUNG

(11) **EP 4 616 965 A1**
(43) Veröffentlichungstag der Anmeldung: **17.09.2025**
(21) Anmeldenummer: 25162496.1
(22) Anmeldetag: 10.03.2025
(51) Int. Cl.: B05C 17/01, F16N 11/08

(54) **SYSTEM MIT EINER KARTUSCHE UND EINER BETÄTIGUNGSVORRICHTUNG**

(30) Priorität: 13.03.2024 DE 102024107124; 12.06.2024 DE 102024116438
(71) Anmelder: JOST-Werke Deutschland GmbH, 63263 Neu-Isenburg (DE); TriboServ GmbH & Co. KG, 97505 Geldersheim (DE)
(72) Erfinder: WEIGAND, Michael, 97505 Geldersheim (DE); APPELMANN, Johannes, 63150 Heusenstamm (DE); KAUFHOLD, Benjamin, 37136 Seeburg (DE)
(74) Vertreter: WSL Patentanwälte Partnerschaft mbB

(57) **Zusammenfassung**

Die Erfindung betrifft ein System mit einer Kartusche (12) und mit einer Betätigungsvorrichtung (10) zum Betätigen der Kartusche (12), wobei die Betätigungsvorrichtung (10) ein Gehäuse (14) mit einem Innenraum (78) aufweist, in dem ein linear wirkender Antrieb angeordnet ist, wobei die Kartusche (12) einen Zylinderraum (80) und ein in dem Zylinderraum (80) beweglich angeordnetes Verdrängungselement (40) aufweist, wobei das Verdrängungselement, den Zylinderraum (80) in einen Aufnahmeraum (46) zur Aufnahme eines viskosen Mediums und einen Leerraum (81) unterteilt und fluiddicht voneinander trennt, wobei der linear wirkende Antrieb mit dem Verdrängungselement (40) der Kartusche (12) in Eingriff bringbar ist, wobei die Kartusche (12) und das Gehäuse (14) jeweils Verbindungselemente zur lösbaren Verbindung miteinander entlang einer Fügerichtung aufweisen, wobei eine in Bezug auf die Fügerichtung axial wirkende Dichtung (82) zwischen dem Gehäuse (14) und der Kartusche angeordnet ist und wobei der Innenraum (78) und der Leerraum (81) im verbundenen Zustand luftdicht verschlossen sind.

## Beschreibung

Die Erfindung betrifft ein System mit einer Kartusche und einer Betätigungsvorrichtung zum Betätigen der Kartusche zum Ausgeben eines viskosen Mediums, insbesondere zum Ausgeben und/oder Dosieren eines Schmierstoffes an eine Schmierstelle, nachfolgend auch als Schmierstoffgeber bezeichnet.

Die Erfindung betrifft im engeren Sinne elektromechanische Schmierstoffgeber mit Schmierstoffkartuschen und einem elektromotorischen Antrieb zur Betätigung derselben. Bei elektromechanischen Schmierstoffgebern kommt als Getriebeelement meist ein Spindelantrieb zur Umwandlung des Drehmoments aus dem Antriebsmotor in eine axiale Vortriebsbewegung eines Verdrängungselements oder Kolbens zum Einsatz. Die Dosierung des Schmierstoffes wird beispielsweise durch einen Mikrocontroller gesteuerten Antrieb in Abhängigkeit von dem Schmierstoffbedarf sowie äußeren Einflüssen, wie beispielsweise die Temperatur, realisiert.

Elektronische Dosiervorrichtungen für medizinischen, molekularbiologischen und pharmazeutischen Anwendungen sind beispielsweise bekannt aus der Schrift EP 3 399 214 A1. Die WO 2022/117 890 A1 befasst sich mit roboterbetriebenen Dispensiersystemen. Andere automatische Dosiervorrichtungen für flüssige und pastöse Medien in industriellen Anwendungen sind aus den Schriften DE 41 07 479 A1, US 2023/0 026 919 A1 oder DE 102 34 881 A1 bekannt. Die Schrift US 2002/0 120 235 A1 offenbart einen handbetätigten Applikationspen zur Verabreichung von Medizindosen. In der Schrift DE 10 2009 027 783 A1 wird ein wahlweise motorisch unterstützter Handapplikator besprochen. Die EP 0 598 867 B1 hat eine gasdruckbetriebene Vorrichtung zur gezielten Abgabe einer Flüssigkeit oder eines viskosen Mediums zum Gegenstand. Die JP H11-235 546 A offenbart eine mittels einem Schrittmotor angetriebene Spritze. Aus der Schrift US 11 746 656 B1 ist eine Mikrodosierpumpe zur Applikation kleiner Mengen flüssiger Materialien, insbesondere zur Verwendung bei der Montage elektronischer Komponenten bekannt.

Die Erfindung findet beispielsweise Anwendung bei Medienschmierung, welche regelmäßig in kleinen Dosierungen des Schmierstoffes stattfindet und bei der deshalb eine Automatisierung hilfreich ist. Andere Anwendungen erfolgen an für Personen erschwert zugänglichen Standorten oder mit Zutrittsbeschränkungen.

Derartige Betätigungsvorrichtungen und Schmierstoffgeber sind beispielsweise aus den Veröffentlichungen DE 20 2012 100 014 U1, DE 43 21 452 C1, DE 10 2005 016 259 A1, DE 44 22 407 A1 oder DE 92 14 096 U1 bekannt. Die bekannten Betätigungsvorrichtungen weisen einheitlich ein Gehäuse mit einem linear wirkenden Antrieb auf, wobei der Antrieb einen Antriebsmotor und ein Getriebe aufweist und wobei das Getriebe zumindest eine Antriebsspindel umfasst. In der DE 44 22 407 A1 und der DE 9 214 096 U1 werden Lösungen diskutiert, bei denen der Antriebsmotor über weitere Getriebekomponenten auf die Antriebsspindel wirkt und diese in eine Drehung versetzt. Am jeweils unteren Ende des Gehäuses befindet sich, mittels eines Gewindes aufgeschraubt oder einstückig mit dem Antriebsgehäuse verbunden, eine Kartusche mit einem Aufnahmeraum, einer Ausgabeöffnung am unteren Ende und mit einem Verdrängungselement oder Kolben zum Ausgeben des viskosen Mediums durch eine Ausgabeöffnung. Der Kolben weist jeweils ein Gewindeelement auf, welches mit der drehbar angetriebenen Antriebspindel der Betätigungsvorrichtung der Gestalt zusammenwirkt, dass der drehfest in der Kartusche positionierte Kolben bei Drehung der Spindel je nach Drehrichtung ab- bzw. aufwärts bewegt wird. Da der Kolben mittels des Schraubengewindes mit der Antriebsspindel verbunden ist, ist entweder der Kolben samt Spindel der Kartusche zugeordnet, wie in der Schrift DE 44 22 407 A1 gezeigt, oder beides zusammen ist der Betätigungsvorrichtung zugeordnet wie in der Schrift DE 9 214 096 U1 gezeigt.

In Abgrenzung hierzu zeigt die Schrift DE 10 2005 016 259 A1 ein System mit einer nicht wechselbaren Kartusche, die einen Kolben ohne Antriebsspindel als strukturelles Bauteil enthält. Ermöglicht wird dies durch eine umgekehrte Kinematik des Antriebs. Eine in dem Dokument nicht dargestellte Spindel wird durch eine drehbar angetriebene Spindelmutter abwärts bewegt. Bei der Abwärtsbewegung drückt die Spindel auf den in der Kartusche gelagerten Kolben und bewegt diesen in Richtung der Ausgabeöffnung zur Ausgabe des Schmiermittels. Die Kartusche kann nach dem Lösen einer Fixierung einfach in axialer Richtung von der Betätigungsrichtung abgenommen werden.

Bei diesem System sind die Kartusche und das Gehäuse der Betätigungsvorrichtung einstückig zusammenhängend ausgebildet und damit nicht zerstörungsfrei voneinander trennbar, so dass nach Entleerung der Kartusche das gesamte System ausgetauscht werden muss. Hingegen sind die Kartusche und das Gehäuse der Betätigungsvorrichtung gemäß DE 92 14 096 U1 mittels einer Schraubverbindung miteinander verbunden, so dass nach Entleerung der in dem Kartuschengehäuse befindlichen Schmiermittelpackung diese gegen eine volle getauscht werden kann.

Während sich der Aufnahmeraum generell beim Ausgeben von Material verkleinert, vergrößert sich das oberhalb des Verdrängungselements oder Kolbens gebildete Volumen. Das Volumen wird von einem Teil der Kartusche, hierin als Leervolumen bezeichnet, und dem Innenraum des Gehäuses der Betätigungsvorrichtung gebildet. Kommen Schmierstoffgeber beispielsweise in korrosiver Umgebung zum Einsatz, so kann es erforderlich sein, dass sie gegenüber der Umgebung luftdicht verschlossen sind, damit insbesondere keine Luft in den Innenraum des Gehäuses der Betätigungsvorrichtung eindringt. In solchen Fällen kommen vorzugsweise die einstückig zusammenhängend ausgebildeten Systeme zum Einsatz, weil die Volumenvergrößerung in Verbindung mit dem luftdichtdichten Abschluss einen Unterdruck in dem oberhalb des Verdrängungselements gebildeten Volumen entstehen lässt.

Soll die Kartusche indes wechselbar und deshalb lösbar mit dem Gehäuse verbindbar sein, würde ein Unterdruck das Öffnen behindern. Deshalb wird im Fall der DE 92 14 096 U1 ein Luftaustausch zwischen dem Aufnahmeraum und dem Leerraum der Kartusche ermöglicht. Dies beschränkt den Einsatz der Kartuschen auf solche mit Schmiermittelpackungen, weil der Kolben den Aufnahmeraum und den Leerraum nicht fluiddicht voneinander trennt. Andere Systeme mit wechselbaren Kartuschen sehen radiale Ventilationsöffnungen für das oberhalb des Verdrängungselements gebildete Volumen vor. Diese Systeme sind für den Einsatz in korrosiver Umgebung wenig geeignet.

Aufgabe der vorliegenden Erfindung ist es deshalb, das eingangs genannte System so zu gestalten, dass ein Kartuschenwechsel möglich ist und gleichzeitig im Betrieb das Eindringen von Luft in das Gehäuse vermieden wird.

Die Aufgabe wird erfindungsgemäß durch ein System mit einer Kartusche und mit einer Betätigungsvorrichtung zum Betätigen der Kartusche zum Ausgeben eines viskosen Mediums gelöst, wobei die Betätigungsvorrichtung ein Gehäuse mit einem Innenraum aufweist, in dem ein linear wirkender Antrieb angeordnet ist, wobei die Kartusche eine Zylinder-Kolbenanordnung mit einem Zylinderraum und einem in dem Zylinderraum beweglich angeordneten Verdrängungselement aufweist, wobei das Verdrängungselement, den Zylinderraum in einen Aufnahmeraum zur Aufnahme des viskosen Mediums und einen Leerraum unterteilt und den Aufnahmeraum und den Leerraum fluiddicht voneinander trennt, wobei der linear wirkende Antrieb mit dem Verdrängungselement der Kartusche in Eingriff bringbar ist, wobei die Kartusche und das Gehäuse jeweils Verbindungselemente zur lösbaren Verbindung entlang einer Fügerichtung miteinander aufweisen, wobei eine in Bezug auf die Fügerichtung axial wirkende Dichtung zwischen dem Gehäuse und der Kartusche angeordnet ist und wobei der Innenraum und der Leerraum im verbundenen Zustand luftdicht verschlossen sind.

Die Erfindung vereint so die Vorteile einer wechselbaren Kartusche mit einem Verdrängungselement, welches als Bestandteil der Kartusche den Aufnahmeraum fluiddicht begrenzt, so dass das Schmiermittel ohne zusätzliche Packung darin aufgenommen wird. Zusätzlich bewirkt die axial wirkende Dichtung zwischen dem Gehäuse und der Kartusche im verbundenen Zustand, dass der Innenraum und der Leerraum luftdicht verschlossen sind und keine Umgebungsluft eingelassen wird. Gleichzeitig kann die Verbindung zwischen der Kartusche und dem Gehäuse der Betätigungsvorrichtung aber leicht gelöst werden, weil bereits eine kurze axiale Bewegung einen ausreichenden Öffnungsspalt schafft, durch den der Innenraum und der Leerraum belüftet werden.

Vorzugsweise weist der Antrieb einen Antriebsmotor und ein Getriebe auf, wobei das Getriebe eine Antriebsspindel und eine Spindelmutter aufweist, wobei der Antriebsmotor mit der Spindelmutter zur Übertragung einer Drehbewegung direkt oder indirekt in Eingriff steht, wobei die Antriebsspindel eine Antriebsachse definiert, um welche die Spindelmutter drehbar angeordnet ist und entlang welcher die Antriebsspindel bei Drehung der Spindelmutter relativ zum Gehäuse über einen Hub hin- und her-bewegbar angeordnet ist.

Dieser Antrieb stellt sicher, dass sich die Antriebsspindel als Getriebeelement nicht selbst dreht und deshalb keine Gewindeverbindung zum Verdrängungselement (Kolben) notwendig ist. Der Kolben als Bestandteil der Kartusche bleibt daher stets vom Antrieb auf einfache Weise, d.h. ohne Schraubbewegung trennbar.

Das Gehäuse weist bevorzugt eine Wandung auf, durch die die Antriebsspindel mit einem ersten axialen Ende herausführbar ist, wobei die Antriebsspindel an dem ersten axialen Ende mit dem Verdrängungselement der Kartusche in Eingriff bringbar ist.

Weiterhin bevorzugt weist die Antriebsspindel entlang eines Abschnittes in dem Gehäuse ein erstes Drehsicherungselement auf, wobei ein dem Gehäuse zugeordnetes zweites Drehsicherungselement vorgesehen ist, und wobei das erste Drehsicherungselement und das zweite Drehsicherungselement der Gestalt zusammenwirken, dass die Spindel wenigstens auf einem Teil des Hubs gegen das Gehäuse drehsicher abgestützt ist.

Unter Last erhöht sich der axiale Druck auf die Antriebsspindel. Dadurch wird die Antriebsspindel zunächst daran gehemmt, sich mit der Spindelmutter mitzudrehen. Überschreitet aber das von der Spindelmutter bei einer Drehung auf die Antriebsspindel übertragene Drehmoment einen bestimmten Wert, neigt diese dazu, sich mit der Spindelmutter mitzudrehen, wodurch bei Betätigung des Antriebs die axiale Vorwärtsbewegung der Antriebsspindel und die Schmierstoffausgabe nicht mehr sichergestellt sind. Umgekehrt kann das Mitdrehen der Antriebsspindel auch dadurch begünstigt sein, dass die Drehhemmung der Antriebsspindel ohne Last zu gering ist. Dies kann beispielsweise der Fall sein, wenn die Antriebsspindel nach dem Entleeren der Kartusche vollständig aus dem Gehäuse herausgedreht ist und zurückgedreht werden muss. Dem wirkt das Drehsicherungselement entgegen.

Andererseits ist ein Freilauf der Antriebsspindel insbesondere bei Schmierstoffgebern mit auswechselbarer Kartusche sehr hilfreich, bei der in der Regel die Kartusche mit dem Gehäuse der Betätigungsvorrichtung durch eine Schraubverbindung fixiert ist. Beim Aufschrauben der Kartusche auf das Gehäuse der Betätigungsvorrichtung entsteht irgendwann ein Kontakt zwischen der Antriebsspindel und dem Verdrängungselement, der zur Vermeidung von Beschädigungen an der Kartusche oder der Betätigungsvorrichtung ein Mitdrehen der Antriebsspindel erforderlich machen kann.

Das Gehäuse, nachfolgend auch Antriebsgehäuse genannt, umschließt typischerweise einen Raum, in dem sowohl der Antriebsmotor als auch das Getriebe und gegebenenfalls eine Steuerelektronik für den Antriebsmotor Platz finden. Die Antriebsspindel ist an ihrem ersten axialen Ende optional im eingefahrenen und jedenfalls im ausgefahrenen Zustand aus dem Gehäuse herausgeführt, d. h. ein Abschnitt der Antriebsspindel ragt durch die Wandung aus dem Gehäuse heraus. Der übrige Abschnitt der Antriebsspindel verbleibt stets innerhalb des Gehäuses.

Das erste Drehsicherungselement befindet sich wenigstens entlang des Abschnitts der Antriebsspindel, der stets in dem Gehäuse verbleibt. Das dem Gehäuse zugeordnete zweite Drehsicherungselement steht mit dem ersten Drehsicherungselement wenigstens auf einem Teil des Hubs und bevorzugt über den gesamten Hub in Eingriff, wodurch die Antriebsspindel drehsicher abgestützt wird.

Steht die Antriebsspindel mit ihrem ersten axialen Ende mit dem Verdrängungselement der Kartusche in Eingriff und wird dagegen angedrückt, um das Verdrängungselement in die Kartusche voranzutreiben, stützt sie sich in axialer Richtung gegen die Spindelmutter ab. Die Spindelmutter ist zu diesem Zweck gegen ein Strukturbauteil, zum Beispiel eine Trägerplatte, in dem Gehäuse abgestützt. Um auch unter Last eine verschleißarme Drehung der Spindelmutter zu ermöglichen, befindet sich zwischen der Spindelmutter und dem Strukturbauteil bevorzugt ein Gleitelement, welches dort lose eingebracht oder an der Spindelmutter oder an dem Strukturbauteil befestigt sein kann.

Bevorzugt bilden das erste Drehsicherungselement und das zweite Drehsicherungselement einen Formschluss oder einen Kraftschluss.

Analog einer Kupplung verbinden die zusammenwirkenden ersten und zweiten Drehsicherungselemente die Antriebsspindel und das Gehäuse wahlweise starr oder bevorzugt - analog zu einer Rutschkupplung - mit begrenzter Drehmomentübertragung. Der Begriff Drehsicherung im Sinne dieser Schrift ist also nicht auf eine starre Verbindung beschränkt, sondern schließt auch solche Verbindungen ein, welche bei Auftreten oder Überschreiten eines bestimmten Drehmoments eine relative Drehung der Antriebsspindel zu dem Gehäuse zulässt. Eine Drehsicherung mit begrenzter Drehmomentübertragung ist gegenüber einer starren Drehsicherung deshalb in Fällen bevorzugt, in denen sichergestellt werden soll, dass bei Auftreten großer Drehmomente das Getriebe und/oder der Antriebsmotor vor einer Beschädigung geschützt sind. Dies kann beispielsweise beim Aufschrauben einer lösbar verbundenen Kartusche, wie vorstehend beschrieben notwendig sein.

Eine kraftschlüssige Drehsicherung - analog einer Reibkupplung - kann beispielsweise realisiert werden, indem auf den Außenumfang der Antriebsspindel als erstes Drehsicherungselement ein Reibelement als zweites Drehsicherungselement angedrückt wird. Je nach Andrücckraft, Größe der Reibfläche und Materialpaarung kann die Spindel bis zu einem gewissen Drehmoment so festgehalten werden. Gemäß einer alternativen Lösung kann das Reibelement auch ähnlich einer selbstsichernden Mutter so ausgestaltet sein, dass es auf einem Axialabschnitt der Gewindespindel mit Teilen der Gewindeflanken oder mit dem vollständigen Gewindeprofil reib- oder kraftschlüssig interagiert.

Eine Drehsicherung mit begrenzter Drehmomentübertragung lässt sich nicht nur durch eine kraftschlüssige Verbindung erzielen, sondern auch im Wege eines Formschlusses. Bevorzugt bilden in solchen Fällen das erste Drehsicherungselement und das zweite Drehsicherungselement einen Formschluss, wobei das zweite Drehsicherungselement entgegen einer Rückstellkraft elastisch verformbar oder von dem ersten Drehsicherungselement wegbewegbar und dadurch der Formschluss aufhebbar ist.

Ein Formschluss lässt sich bevorzugt erzielen, indem das erste Drehsicherungselement in Form einer oder mehrerer Abflachungen entlang des Abschnitts an der Antriebsspindel ausgestaltet ist und das zweite Drehsicherungselement ein oder mehrere an der Abflachung oder an den Abflachungen anliegende, mittelbar oder unmittelbar mit dem Gehäuse verbundene Führungselemente aufweist.

Alternativ oder zusätzlich kann das erste Drehsicherungselement in Form einer oder mehrerer Vertiefungen entlang des Abschnitts in der Antriebsspindel ausgestaltet sein und das zweite Drehsicherungselement einen oder mehrere in die Vertiefung oder in die Vertiefungen eingreifende, mittelbar oder unmittelbar mit dem Gehäuse verbundene Vorsprünge aufweist.

Die Abflachung oder Abflachungen entlang des Abschnitts der Antriebsspindel werden hierin nachfolgend auch als Schlüsselfläche bzw. Schlüsselflächen bezeichnet. Zwei Führungselemente des zweiten Drehsicherungselements bilden ein dazu passendes Schlüsselmaul, welches die Schlüsselflächen der Antriebsspindel umgreift. Die Vertiefung oder Vertiefungen können in Form von Einkerbungen oder Nuten oder Durchbrüchen realisiert sein. Der Vorsprung oder die Vorsprünge des zweiten Drehsicherungselements können von in die Vertiefungen eingreifenden Stiften gebildet sein.

Das mit dem Gehäuse verbundene Führungselement ist vorzugsweise elastisch entgegen einer Rückstellkraft von dem ersten Drehsicherungselement wegbewegbar ausgestaltet.

Bei einem erfindungsgemäßen System (Schmierstoffgeber) weist die Kartusche einem Aufnahmeraum zur Aufnahme des viskosen Mediums, eine Ausgabeöffnung für das viskose Medium auf.

Besonders bevorzugt ist die Kartusche mittels einer Schraubverbindung oder einer Bajonettverbindung mit dem Gehäuse verbindbar. Die Verbindungselemente der Kartusche und des Gehäuses sind demgemäß bevorzugt in Form von Gewinden oder Elementen eines Bajonettverschlusses ausgebildet.

Eine Schraubverbindung oder einer Bajonettverbindung erleichtern das Öffnen auch bei einem Unterdruck in dem Gehäuse.

Gemäß einer bevorzugten Ausgestaltung der Betätigungsvorrichtung weist die Antriebsspindel an ihrem ersten axialen Ende ein Koppelelement zur Verbindung mit dem Verdrängungselement oder Kolben der Kartusche auf.

Das Koppelelement ist weiterhin bevorzugt drehfest mit der Antriebsspindel verbunden und weist radial von der Antriebsachse beabstandet ein erstes Anschlagelement zum in Eingriff bringen mit dem Verdrängungselement oder Kolben auf.

Das Verdrängungselement weist entsprechend bevorzugt radial von der Antriebsachse beabstandet ein zweites Anschlagelement auf, wobei das erste Anschlagelement und das zweite Anschlagelement der Gestalt zusammenwirken, dass das Koppelelement gegen das Verdrängungselement drehsicher abstützbar ist.

Der Schmierstoffgeber stellt in dieser Ausgestaltung eine zweifache Drehsicherung bereit, die wie folgt wirkt. Im Falle kleinerer Drehmomente, während beispielsweise das Koppelelement keinen oder nur einen leichten Kontakt mit dem Verdrängungselement hat, wird die Antriebsspindel mittels des ersten Drehsicherungselements und des zweiten Drehsicherungselements festgehalten und in Folge der Drehung der Spindelmutter bewegt. Sobald das Koppelelement axial Druck auf das Verdrängungselement ausübt, erhöht sich das von der Spindelmutter auf die Antriebsspindel übertragene Drehmoment, bis die vorstehend beschriebene Drehsicherung mit begrenzter Drehmomentübertragung die Antriebsspindel freigibt und diese sich mit der Spindelmutter mitdrehen kann. Hierdurch wird zunächst ein weiteres axiales Ausfahren der Antriebsspindel verhindert. Die Antriebsspindel dreht sich aber nur soweit mit, bis das erste Anschlagelement des Koppelelements und das zweite Anschlagelement des Verdrängungselements in Eingriff gelangen. Von diesem Moment an stützt sich das Koppelelement über das erste Anschlagelement und das zweite Anschlagelement an dem Verdrängungselement ab. Das Verdrängungselement ist seinerseits beispielsweise durch Reibschluss oder durch Formschluss gegenüber der Kartuschenwand abgestützt, sodass ein Weiterdrehen der Antriebsspindel wirksam verhindert ist. Die Antriebsspindel wird mit dem Koppelelement fortan in axialer Richtung weiter ausgefahren und so das Verdrängungselement in den Aufnahmeraum der Kartusche vorgeschoben, wobei das viskose Medium aus dem Aufnahmeraum durch die Ausgabeöffnung herausgedrückt wird.

Gemäß einer vorteilhaften Weiterbildung der Erfindung weist die Betätigungsvorrichtung eine mit dem Antriebsmotor verbundene Motorsteuerung auf, die eine Sensorik zur Erfassung einer oberen und/oder einer unteren Endposition der Antriebsspindel umfasst.

Die Sensorik kann beispielsweise durch eine Messelektronik zur Erfassung der Strom- oder Leistungsaufnahme des Antriebsmotors und somit zur indirekten Erfassung des benötigten Drehmoments ausgestaltet sein. Alternativ oder zusätzlich kann die Sensorik einen oder mehrere berührungslose oder mechanische Positionsschalter umfassen.

Weiterhin bevorzugt ist die Motorsteuerung eingerichtet, den Antriebsmotor bei Erfassung der oberen oder unteren Endposition abzuschalten oder die Drehrichtung des Antriebsmotors umzukehren.

Auf diese Weise wird sichergestellt, dass der Antriebsmotor die Antriebsspindel stets auch aus der jeweiligen Endposition wieder herausfahren kann.

Weiterhin bevorzugt weist die Betätigungsvorrichtung ein elastisches Element auf, welches so angeordnet ist, dass es in einer in das Gehäuse eingefahrenen oberen Endposition der Antriebsspindel bezogen auf die Axialrichtung mittelbar oder unmittelbar zwischen der Antriebsspindel und dem Gehäuse vorgespannt ist.

Das elastische Element stellt sicher, dass das benötigte Drehmoment zum Antreiben der Antriebsspindel bei Erreichen der Endposition langsam bzw. in definierter Weise ansteigt, sodass die Bestimmung der Endposition durch Erfassung der Strom- oder Leistungsaufnahme zuverlässig erfolgen kann und vermieden wird, dass die Antriebsspindel in der Endposition so festgefahren ist, dass das Drehmoment des Motors zum Herausfahren aus dieser Position nicht mehr genügt.

Das elastische Element kann zu diesem Zweck vorzugsweise zwischen dem Koppelelement und einem ersten Abschnitt der Gehäusewandung angeordnet sein. Alternativ oder zusätzlich kann sich das elastische Element zwischen einem zweiten axialen Ende der Antriebsspindel und einem zweiten Abschnitt der Gehäusewandung befinden.

Bevorzugt ist die Dichtung eine ringförmige, elastische Dichtung mit einem U-förmigen Profil.

Weiterhin bevorzugt weist die Betätigungsvorrichtung eine Trägerplatte auf, welche im verbundenen Zustand zwischen einem Abschnitt des Gehäuses und einem Abschnitt der Kartusche axial eingespannt ist.

Hierbei handelt es sich vorzugsweise um die Trägerplatte, gegen welche sich die Spindelmutter unter Last abstützt, wenn die Antriebsspindel mit ihrem ersten axialen Ende gegen das Verdrängungselement der Kartusche drückt.

Das U-Profil der Dichtung fasst die Trägerplatte vorteilhafter Weise randseitig ein. Durch die Elastizität der Dichtung kann die Trägerplatte ohne weitere Befestigungsmittel in einer der Kontur der Trägplatte entsprechend ausgeformten Aufnahme in dem Gehäuse fixiert werden. Die Dichtung dient somit zusätzlich als Montagehilfe und ermöglich ein einfaches, werzeugfreies Entfernen der Trägerplatte, um einen Zugang zu dem Gehäuseinneren zu schaffen.

Ferner ist die Dichtung vorzugsweise zusammen mit der Trägerplatte im verbundenen Zustand zwischen dem Abschnitt des Gehäuses und dem Abschnitt der Kartusche axial eingespannt.

Die Antriebsachse und die Fügerichtung fallen vorzugsweise zusammen. Dies vereinfacht den Zusammenbau des Systems, weil sich insbesondere bei einer Schraubverbindung oder einer Bajonettverbindung die Kartusche um die Antriebsachse rotierend an das Gehäuse anschrauben lässt und sich eine in Teilen vorhandene Rotationssymmetrie des Systems und der Freilauf der Antriebsspindel wie vorstehend beschrieben nutzen lässt.

Die Betätigungsvorrichtung weist einen durch einen geschlossenen Abschnitt einer Wandung des Gehäuses kontaktlos wirkenden Schalter für den Antriebsmotor auf.

Durch diese Maßnahme wird eine weitere Öffnung der Gehäusewandung vermieden, was zur zur effektiven Abdichtung des Systems beiträgt. Eine Betätigungselement des Schalters kann auf der Außenseite des Gehäuses manuell leicht bedienbar angebracht werden und kommuniziert kontaktlos mit einem auf der Innenseite der Gehäusewandung, d.h. im luftdicht abgeschlossenen Innenraum des Gehäuses, angebrachten Sensorelement, welches beispielsweise mit der Motorsteuerung verbunden ist. Die Kommunikation kann beispielsweise auf einer magnetischen oder einer kapazitiven Kopplung basieren.

Die Kartusche weist eine Ausgabeöffnung auf, durch die das viskose Medium aus dem Aufnahmeraum der Kartusche ausgebbar ist. Bevorzugt ist die Ausgabeöffnung mittels eines Rückschlagventils gegen ein Rückströmen des ausgegebenen Mediums gesichert.

Hierdurch wird für den Fall, dass eine etwaige thermische Volumenverringerung des Mediums im Aufnahmeraum oder ein beispielsweise durch einen etwaigen Unterdruck im Innenraum bedingter Rückzug des Verdrängungselements bereits ausgegebenes Medium unbeabsichtigt wieder in die Kartusche eingesaugt wird.

Die Erfindung wird nachfolgend anhand der Figurenzeichnungen weiter erläutert. Es zeigen:
- Figur 1: Eine Schnittdarstellung durch das erfindungsgemäße System in einer ersten Schnittebene;
- Figur 2: das erfindungsgemäße System nach Figur 1 in perspektivischer Schnittdarstellungen, geschnitten in einer zweiten Ebene;
- Figur 3: eine perspektivische Ansicht der Betätigungsvorrichtung mit Blick auf die Verbindungseite zu der Kartusche; und
- Figur 4: eine perspektivische Ansicht der Kartusche mit Blick auf die Verbindungseite zu der Betätigungsvorrichtung.

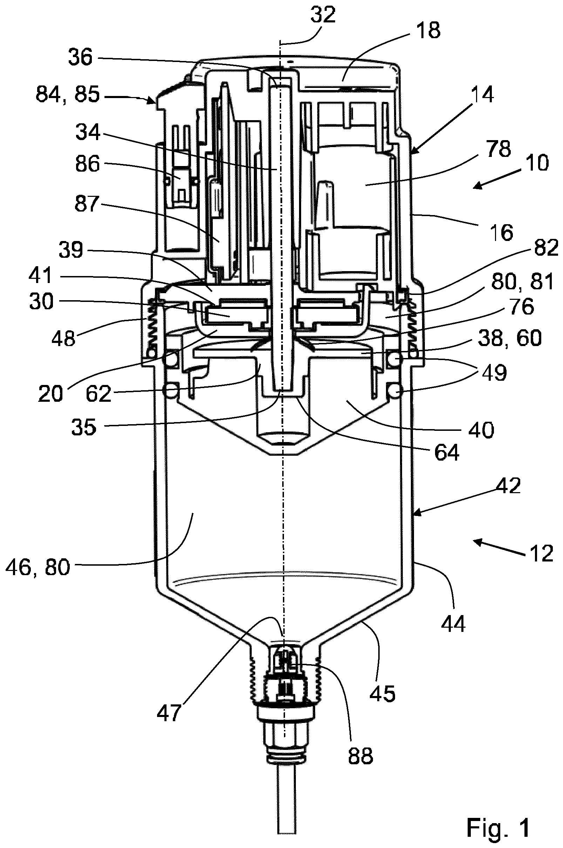

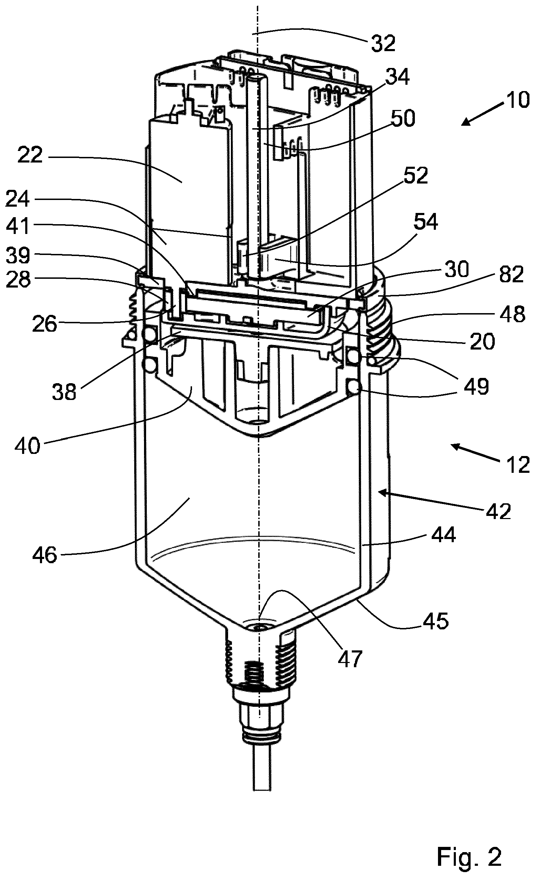

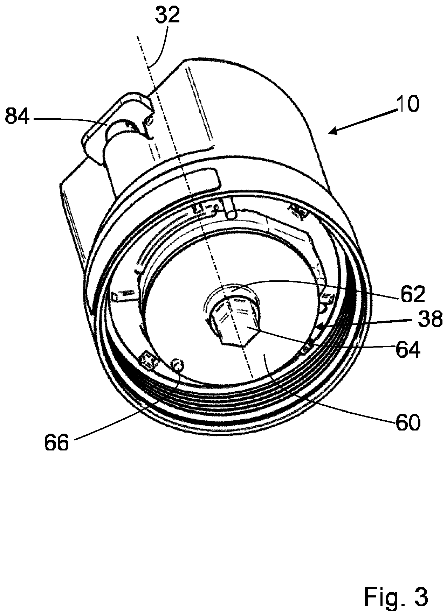

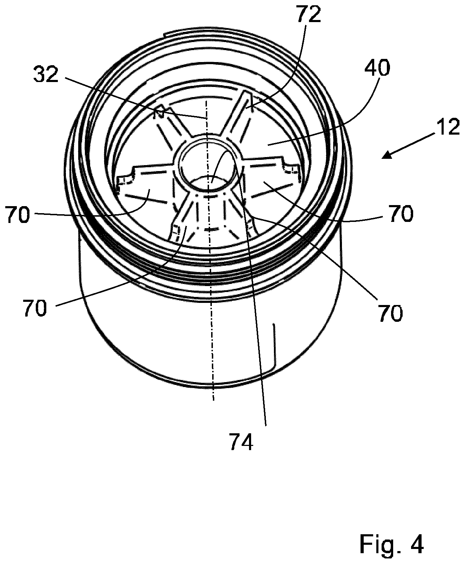

In den Figuren 1 und 2 ist dasselbe zusammengesetzte System, bestehend aus einer Betätigungsvorrichtung 10 und einer mit dieser verbundenen Kartusche 12, gezeigt. Die Betätigungsvorrichtung 10 weist ein Gehäuse 14 mit einer umfänglichen Gehäusewandung 16, einem Gehäusedeckel 18, auch als zweiter Abschnitt der Gehäusewandung bezeichnet, und einem Gehäuseboden 20, auch als erster Abschnitt der Gehäusewandung bezeichnet, auf, wobei in der Darstellung der Figur 2 zur besseren Sichtbarkeit der innenliegenden Elemente das Gehäuse 14 der Betätigungsvorrichtung 10' mit Ausnahme des Gehäusebodens 20 weggelassen wurde. Die Figur 3 zeigt die erfindungsgemäße Betätigungsvorrichtung separat. Die Figur 4 zeigt die Kartusche aus den Figuren 1 und 2 ebenfalls separat.

In dem Gehäuse 14 ist ein linear wirkender Antrieb, bestehend aus einem Antriebsmotor 22 und einem Getriebe, angeordnet. Das Getriebe umfasst ein unmittelbar an den Antriebsmotor angeschlossenes Motorgetriebe 24. Aus dem gemeinsamen Gehäuse ist eine Abtriebswelle 26 herausgeführt. Auf der Abtriebswelle 26 ist ein Stimrad 28 montiert, welches die Drehung der Abtriebswelle 26 auf eine Spindelmutter 30 mit umfänglichem Zahnkranz überträgt. Entlang einer Antriebsachse 32 erstreckt sich als weiterer Teil des Getriebes eine mit der Spindelmutter zusammenwirkende Antriebsspindel 34. Die Spindelmutter 30 dreht sich also um diese Antriebsachse 32.

Die Antriebsspindel 34 ist mit ihrem ersten axialen Ende 35 durch den Gehäuseboden 20 aus dem Gehäuse 14 der Betätigungsvorrichtung 10 herausgeführt. An dem ersten axialen Ende 35 der Antriebsspindel 34 ist ein Koppelelement 38 angeordnet und mit der Antriebsspindel 34 drehfest verbunden. Über das Koppelelement 38 ist die Antriebsspindel 34 in dem in den Figuren 1 und dargestellten verbundenen Zustand mittelbar mit einem Verdrängungselement oder Kolben 40 der Kartusche 12 in Eingriff gebracht.

In dem Gehäuse 14 befindet sich eine Trägerplatte 39, gegen welche sich die Spindelmutter 30 unter Last abstützt. Der Gehäuseboden 20 ist in die Trägerplatte 39 von unten eingehängt. Seine Aufgabe ist es, die Spindelmutter 30 von unten zu schützen und in ihrer Position zu halten. Aufgabe des Gehäusebodens 20 ist es indes nicht, die unter Last auf die Spindelmutter wirkende Axialkraft in die Struktur des Gehäuses abzuleiten. Zwischen der Spindelmutter 30 und der Trägerplatte 39 befindet sich ein Gleitelement 41 für eine verschleißarme Drehung der Spindelmutter auch unter Last.

Die Kartusche 12 weist weiterhin eine Kartuschenwandung 42 mit einer Umfangswand 44 und einer dem Verdrängungselement oder Kolben 40 gegenüberliegenden Bodenwand 45 auf. Die Kartuschenwandung 42 umschließt zusammen mit dem Kolben 40 einen Aufnahmeraum 46 zur Aufnahme des nicht dargestellten viskosen Mediums. In der Bodenwand 45 befindet sich eine Ausgabeöffnung 47. Wird der Kolben 40 mittels des Antriebs aus der in den Figuren 1 und 2 gezeigten Darstellung in Richtung der Bodenwand 45 bewegt, so wird das viskose Medium durch die Ausgabeöffnung 47 aus der Kartusche 12 herausgefördert. Um zu verhindem, dass bereits ausgegebenes Medium unbeabsichtigt wieder in die Kartusche eingesaugt wird, wenn sich der Kolben 40 beispielsweise beabsichtigt oder unbeabsichtigt wieder aufwärts bewegt oder wenn sich das Volumen des Mediums im Aufnahmeraum durch eine Abkühlung verringert weist die Kartusche 12 in, vor oder hinter der Ausgabeöffnung 47 ein Rückschlagventil 88 auf.

Das Gehäuse 14 der Betätigungsvorrichtung 10 und die Wandung 42 der Kartusche 12 sind zweiteilig ausgeführt und weisen jeweils Verbindungselemente zur lösbaren Verbindung miteinander entlang einer Fügerichtung auf. Hierbei handelt sich in dem Ausführungsbeispiel um eine Schraubverbindung 48. Die Schraubverbindung 48 stellt nur eine mögliche Ausführungsform einer lösbaren Verbindung zwischen der Betätigungsvorrichtung 10 und der Kartusche 12 dar. An deren Stelle kann beispielsweise auch eine Bajonettverbindung, eine Rastverbindung oder eine andere selbsthemmende Steckverbindung vorgesehen sein. Die Fügerichtung fällt mit der Antriebsachse 32 zusammen, so dass sich die Kartusche 12 um die Antriebsachse 32 rotierend an das Gehäuse 14 anschrauben lässt.

Der Kolben 40 ist gegenüber der zylindrischen Innenfläche der Umfangswand 44 der Kartusche 12 mittels einer doppelten O-Ring-Dichtung 49 abgedichtet. Der Kolben 40 unterteilt somit einen Zylinderraum 80 in den Aufnahmeraum 46 und einen Leerraum 81 und trennt diese Teilräume fluiddicht voneinander, damit das viskose Medium bei Druckbeaufschlagung nicht nach oben in Richtung der Betätigungsvorrichtung 10 entweichen kann. Ferner bewirkt die doppelte O-Ring-Dichtung 49 eine Drehsicherung des Kolbens 40 gegenüber der Kartuschenwandung 42 und dem damit verbundenen Gehäuse 14 der Betätigungsvorrichtung 10.

In Bezug auf die Fügerichtung ist zwischen dem Gehäuse 14 und der Kartusche 12 eine axial wirkende Dichtung 82 angeordnet ist, mit der der Innenraum 78 und der Leerraum 81 im verbundenen Zustand luftdicht verschlossen sind. Die Schraubverbindung 48 zwischen der Kartusche 12 und dem Gehäuse 14 der Betätigungsvorrichtung ist deshalb gegenüber alternativen Verbindungen bevorzugt, weil bereits eine kurze Drehung einen ausreichenden Öffnungsspalt schafft, durch den der Innenraum 78 und der Leerraum 80 belüftet werden. Bei einer geringen Gewindesteigung der Schraubverbindung 48 ist der Kraftaufwand zur Überwindung eines etwaigen Unterdruckes nur gering. Bevorzugt ist daher einer Gewindesteigung der Schraubverbindung von wenigstens 0,25 mm und besonders bevorzugt von wenigstens 0,5 mm sowie von höchstens 2mm und besonders bevorzugt von höchstens 1 mm.

Die Dichtung ist 82 eine ringförmige, elastische Dichtung mit einem U-förmigen Profil, welches die Trägerplatte 39 randseitig einfasst. Durch die Elastizität der Dichtung 82 kann die Trägerplatte 39 ohne weitere Befestigungsmittel in einer der Kontur der Trägplatte 39 entsprechend ausgeformten Aufnahme in der umfänglichen Gehäusewandung 16 kraftschlüssig fixiert werden. Die Dichtung 82 dient somit zusätzlich als Montagehilfe und ermöglich ein einfaches, werzeugfreies Entfernen der Trägerplatte 39, um einen Zugang zu den im Gehäuseinneren befindlichen Antriebskomponenten zu schaffen.

Im dargestellten verbundenen Zustand ist die Trägerplatte 39 zusammen mit der Dichtung 82 zwischen der Aufnahme in der umfänglichen Gehäusewandung 16 und einem stirnseitigen Abschnitt der Umfangswand 44 der Kartusche 14 axial eingespannt.

Damit sich die Antriebsspindel 34 ohne Belastung oder bei geringer Belastung nicht mit der rotierenden Spindelmutter 30 mitdrehen kann, weist diese entlang eines Abschnitts in dem Gehäuse 14 ein erstes Drehsicherungselement in Form zweier gegenüberliegender Abflachungen oder Schlüsselflächen 50 auf. An den Schlüsselflächen 50 liegen jeweils zweie auf beiden Seiten der Antriebsspindel 34 gegenüberliegende und mit dem Gehäuse 14 verbundene Führungselemente 52, 54 an, die das zweite Drehsicherungselement bilden. Die beiden Führungselemente 52, 54 bilden eine gabelförmige Anordnung mit einer Art Schlüsselmaul in ihrem Zwischenraum aus, welche die Schlüsselflächen 50 der Antriebsspindel 34 formschlüssig umgreift. Die Führungselemente 52 und 54 sind so konstruiert, dass sie, bezogen auf die Antriebsachse 32 radial auswärts elastisch ausweichen können, wenn das von der Antriebsspindel 34 über die Schlüsselflächen 46 ausgeübte Drehmoment einen bestimmten Wert übersteigt. Elastisch ausweichen bedeutet, dass die Führungselemente 52 und 54 der radial auswärts gerichteten Bewegung eine Rückstellkraft entgegensetzen, die sie nach Wegfall der Ursache für die Bewegung wieder in den Ausgangszustand zurückbewegt. Hierdurch wird sichergestellt, dass sich die Antriebsspindel 34 mit der Spindelmutter 30 mitdrehen kann, wenn beispielsweise die Kartusche 12 an das Gehäuse 10 der Betätigungsvorrichtung angeschraubt und dabei ein entsprechend großes Drehmoment auf die Antriebsspindel übertragen wird. Das erste Drehsicherungselement und das zweite Drehsicherungselement bilden auf diese Weise eine Drehsicherung mit begrenzter Drehmomentübertragung.

Das Koppelelement 38 ist ein überwiegend zylindersymmetrisches Element mit einer Scheibe 60, in axialer Fortsetzung einem Zylinderansatz 62 und wiederum in axialer Fortsetzung einem Sechskantelement 64, welches mit einem handelsüblichen Schlüssel betätigt werden kann, um beispielsweise die Antriebsspindel manuell auf- oder abwärts bewegen zu können. In dem zylindrischen Ansatz 62 und dem Sechskantelement 64 findet sich von der dem Gehäuse 14 zugewandten Seite des Koppelelements 38 her eine Bohrung, in welche die Antriebsspindel 34 zwecks Kraftschluss eingepresst ist und so eine drehfeste Verbindung zwischen der Antriebsspindel 34 und dem Koppelelement 38 herstellt. Um trotz der Drehsicherung mit begrenzter Drehmomentübertragung einen linearen Antrieb des Kolbens 40 bei großer Belastung sicherzustellen, muss die Antriebsspindel 34 im Betrieb schließlich an einer Weiterdrehung gehindert werden. Zu diesem Zweck weist das Koppelelement 38 auf seiner der Kartusche zugewandten Unterseite ein radial von der Antriebsachse 32 beabstandetes erstes Anschlagelement 66 auf.

Das Verdrängungselement 40 weist auf seiner der Betätigungsvorrichtung 10 zugewandten Oberseite eine Mehrzahl radial angeordneter Versteifungsrippen 70 auf, von denen eine Versteifungsrippe 72 ein zweites Anschlagelement des Kolbens 40 bildet. Die Versteifungsrippen 70, 72 definieren auf Ihrer der Betätigungsvorrichtung 10 zugewandten Oberseite einer ebene Auflagefläche senkrecht zur Antriebsachse 32, auf der die Scheibe 60 des Koppelelements 38 aufliegt. Der zylindrische Ansatz 62 ist dann in einer Zentrumsbohrung 74 in dem Kolben 40 zentriert.

Das zweite Anschlagelement 72 unterscheidet sich von dem übrigen Versteifungsrippen 70 dadurch, dass letztere jeweils im radial äußeren Bereich Freimachungen aufweisen, welche das erste Anschlagelement 66 bei einer relativen Drehung des Koppelelements 38 zu dem Kolben 40 passieren lassen. Je nach Drehrichtung der Antriebsspindel 34 schlägt das erste Anschlagelement 66 nach maximal einer annähernd vollständigen Umdrehung entweder links oder rechts an der durchgehende Versteifungsrippe 72 an. Das erste Anschlagelement 66 und das zweite Anschlagelement 72 wirken dann dergestalt zusammen, dass das Koppelelement 38 gegen das Verdrängungselement 40 drehsicher abgestützt ist.

Sowohl das Gehäuse 14 der Betätigungsvorrichtung 10 als auch die Wandung 42 der Kartusche 12 weisen eine im Wesentlichen kreiszylindrische Grundform auf, deren Längsachse mit der Antriebsachse 32 der Antriebsspindel 34 zusammenfällt. Hierdurch ist sichergestellt, dass sich beim Einschrauben der Kartusche 12 in das Gehäuse 14 der Betätigungsvorrichtung 10 der Kolben 40 um die Antriebsachse 32 dreht und somit ein Drehmoment um diese Achse herum über das Koppelelement 38 auf die Antriebsspindel 34 überträgt, sobald die Scheibe 60 auf der ebenen Auflagefläche aufliegt. Die Drehsicherung mit begrenzter Drehmomentübertragung gibt bei Überschreiten des voreingestellten Grenzmoments die Antriebsspindel zur Drehung frei, sodass die Kartusche und die Betätigungsvorrichtung beim Zusammenschrauben nicht beschädigt werden.

In dem Gehäuse 14 der Betätigungsvorrichtung 10 befindet sich neben dem Antriebsmotor und dem Getriebe eine mit dem Antriebsmotor verbundene, nicht dargestellte Motorsteuerung einschließlich einer elektronischen Sensorik zu Erfassung der oberen und der unteren Endposition der Antriebsspindel 34. Die obere Endposition wird durch ein elastisches Element in Form einer Federscheibe 76 zwischen dem Koppelelement 38 und dem Gehäuseboden 20, definiert. Die Federscheibe 76 wird bei Annäherung der Antriebsspindel 34 an ihre obere Endposition, bezogen auf die axiale Richtung zwischen dem Koppelelement 38 und dem Gehäuse 14 und damit mittelbar zwischen der Antriebsspindel 34 und dem Gehäuse 14 vorgespannt. Hierdurch steigt das für den Antrieb benötigte Drehmoment zunächst linear an, wodurch die Sensorik der Motorsteuerung eine erhöhte Leistungsaufnahme des Antriebsmotors 22 registriert und diesen bei Erreichen eines voreingestellten Grenzwerts abschaltet.

Anstelle der Anordnung eines elastischen Elements zwischen dem Koppelelement 38 und dem zweiten Abschnitt 20 der Gehäusewand 14 kann alternativ oder zusätzlich ein elastisches Element zwischen einem zweiten axialen Ende 36 der Antriebsspindel 34 und dem zweiten Abschnitt der Gehäusewandung 14, also dem Gehäusedeckel 18, vorgesehen sein.

Die Betätigungsvorrichtung 10 weist einen durch einen geschlossenen Abschnitt der umfänglichen Gehäusewandung 16 kontaktlos wirkenden Schalter 84 für den Antriebsmotor 22 auf. Hierdurch wird eine weitere Öffnung der Gehäusewandung vermieden, was zur zur effektiven Abdichtung des Systems beiträgt. Ein mechanisches Betätigungselement 85 des Schalters 84 dient auf der Außenseite des Gehäuses 14 zur manuell Betätigung, durch Druck von oben, wobei es sich abwärts relativ zum Gehäuse14, vorzugsweise gegen eine Federspannung bewegen lässt. In einem unteren Bereich des Betätigungselements 85 befindet sich eine Geber 86, beispielsweise in Form eines Permanentmagneten, welcher sich bei Betätigung ebenfalls relativ zum Gehäuse 14 abwärts bewegt. Auf der Innenseite der Gehäusewandung 16, d.h. im luftdicht abgeschlossenen Innenraum 78 ist ein Sensorelement 87, beispielsweise in Form eines Magnetsensors angebracht. Das Sensorelement 87 ist mit dem Antriebsmotor 22 beispielsweise über die Motorsteuerung verbunden, um die Betätigungsvorrichtung 10 manuell durch einen Schaltimpuls in Betrieb oder außer Betrieb zu setzen.

### Bezugszeichenliste

- 10: Betätigungsvorrichtung
- 12: Kartusche
- 14: Gehäuse der Betätigungsvorrichtung
- 16: umfängliche Gehäusewandung
- 18: Gehäusedeckel, zweiter Abschnitt der Gehäusewandung
- 20: Gehäuseboden, erster Abschnitt der Gehäusewandung
- 22: Antriebsmotor
- 24: Motorgetriebe
- 26: Abtriebswelle des Motorgetriebes
- 28: Stirnrad
- 30: Spindelmutter
- 32: Antriebsachse
- 34: Antriebsspindel
- 35: erstes axiales Ende der Antriebsspindel
- 36: zweites axiales Ende der Antriebsspindel
- 38: Koppelelement
- 39: Trägerplatte
- 40: Verdrängungselement, Kolben
- 41: Gleitelement
- 42: Kartuschenwandung
- 44: Umfangswand
- 45: Bodenwand
- 46: Aufnahmeraum
- 47: Ausgabeöffnung
- 48: Schraubverbindung
- 49: O-Ring-Dichtung
- 50: Abflachung, Schlüsselfläche
- 52: Führungselement
- 54: Führungselement
- 60: Scheibe des Koppelelements
- 62: Zylinderansatz
- 64: Sechskantelement
- 66: erstes Anschlagelement
- 70: Versteifungsrippe
- 72: zweites Anschlagelement, Versteifungsrippe
- 74: Zentrumsbohrung
- 76: elastisches Element, Federscheibe
- 78: Innenraum des Gehäuses
- 80: Zylinderraum der Kartusche
- 81: Leerraum der Kartusche
- 82: Dichtung
- 84: Schalter
- 86: Geber
- 87: Sensorelement
- 88: Rückschlagventil

## Patentansprüche

1. System mit einer Kartusche (12) und mit einer Betätigungsvorrichtung (10) zum Betätigen der Kartusche (12) zum Ausgeben eines viskosen Mediums,
wobei die Betätigungsvorrichtung (10) ein Gehäuse (14) mit einem Innenraum (78) aufweist, in dem ein linear wirkender Antrieb angeordnet ist,
wobei die Kartusche (12) eine Zylinder-Kolbenanordnung mit einem Zylinderraum (80) und einem in dem Zylinderraum (80) beweglich angeordneten Verdrängungselement (40) aufweist,
wobei das Verdrängungselement, den Zylinderraum (80) in einen Aufnahmeraum (46) zur Aufnahme des viskosen Mediums und einen Leerraum (81) unterteilt und den Aufnahmeraum (46) und den Leerraum (81) fluiddicht voneinander trennt,
wobei der linear wirkende Antrieb mit dem Verdrängungselement (40) der Kartusche (12) in Eingriff bringbar ist,
wobei die Kartusche (12) und das Gehäuse (14) jeweils Verbindungselemente zur lösbaren Verbindung miteinander entlang einer Fügerichtung aufweisen, ,
wobei eine in Bezug auf die Fügerichtung axial wirkende Dichtung (82) zwischen dem Gehäuse (14) und der Kartusche angeordnet ist und
wobei der Innenraum (78) und der Leerraum (81) im verbundenen Zustand luftdicht verschlossen sind.

2. System nach Anspruch 1,
**dadurch gekennzeichnet, dass** der Antrieb einen Antriebsmotor (22) und ein Getriebe aufweist,
wobei das Getriebe eine Antriebsspindel (34) und eine Spindelmutter (30) aufweist, wobei der Antriebsmotor (22) mit der Spindelmutter (30) zur Übertragung einer Drehbewegung direkt oder indirekt in Eingriff steht,
wobei die Antriebsspindel (34) eine Antriebsachse (32) definiert, um welche die Spindelmutter (30) drehbar angeordnet ist und entlang welcher die Antriebsspindel (34) bei Drehung der Spindelmutter (30) relativ zum Gehäuse (14) über einen Hub hin- und her-bewegbar angeordnet ist.

3. System nach Anspruch 2,
**dadurch gekennzeichnet, dass** das Gehäuse (14) eine Wandung (16, 18, 20) aufweist, durch die die Antriebsspindel (34) mit einem ersten axialen Ende (35) herausführbar ist,
wobei die Antriebsspindel (34) an dem ersten axialen Ende (35) mittelbar oder unmittelbar mit dem Verdrängungselement (40) der Kartusche (12) in Eingriff bringbar ist.

4. System nach einem der Ansprüche 2 oder 3,
**dadurch gekennzeichnet, dass** die Antriebsspindel (34) entlang eines Abschnittes in dem Gehäuse (14) ein erstes Drehsicherungselement aufweist,
wobei ein dem Gehäuse (14) zugeordnetes zweites Drehsicherungselement vorgesehen ist, und wobei das erste Drehsicherungselement und das zweite Drehsicherungselement der Gestalt zusammenwirken, dass die Antriebsspindel (34) wenigstens auf einem Teil des Hubs gegen das Gehäuse (14) drehsicher abgestützt ist.

5. System nach Anspruch 4,
**dadurch gekennzeichnet, dass** das erste Drehsicherungselement und das zweite Drehsicherungselement einen Formschluss bilden, wobei das zweite Drehsicherungselement entgegen einer Rückstellkraft elastisch verformbar oder elastisch von dem ersten Drehsicherungselement wegbewegbar und dadurch der Formschluss aufhebbar ist.

6. System nach einem der Ansprüche 2 bis 5,
**dadurch gekennzeichnet, dass** die Antriebsspindel (34) an dem ersten axialen Ende (35) ein Koppelelement (38) zur Verbindung mit dem Verdrängungselement (40) der Kartusche (12) aufweist,
wobei das Koppelelement (38) drehfest mit der Antriebsspindel (34) verbunden ist und radial von der Antriebsachse (32) beabstandet ein erstes Anschlagelement (66) aufweist,
wobei das Verdrängungselement (40) radial von der Antriebsachse (32) beabstandet ein zweites Anschlagelement (72) aufweist,
und wobei das erste Anschlagelement (66) und das zweite Anschlagelement (72) der Gestalt zusammenwirken, dass das Koppelelement (38) gegen das Verdrängungselement (40) drehsicher abstützbar ist.

7. System nach einem der Ansprüche 2 bis 6,
**dadurch gekennzeichnet, dass** die Betätigungsvorrichtung (10) eine mit dem Antriebsmotor (22) verbundene Motorsteuerung aufweist, die eine Sensorik zur Erfassung einer oberen und einer unteren Endposition der Antriebspindel (34) umfasst, wobei die Motorsteuerung eingerichtet ist, den Antriebsmotor (22) bei Erfassung der oberen oder unteren Endposition abzuschalten oder die Drehrichtung des Antriebsmotors (22) umzukehren.

8. System nach einem der Ansprüche 2 bis 7,
**dadurch gekennzeichnet, dass** die Betätigungsvorrichtung (10) ein elastisches Element (76) aufweist, welches so angeordnet ist, dass es in einer in das Gehäuse (14) eingefahrenen oberen Endposition der Antriebsspindel bezogen auf die axiale Richtung mittelbar oder unmittelbar zwischen der Antriebsspindel (34) und dem Gehäuse (14) vorgespannt ist.

9. System nach Anspruch 8 in Verbindung mit Anspruch 6,
**dadurch gekennzeichnet, dass** das elastische Element (76) zwischen dem Koppelelement (38) und einem ersten Abschnitt (20) der Gehäusewandung angeordnet ist.

10. System nach einem der vorstehenden Ansprüche,
**dadurch gekennzeichnet, dass** die Dichtung (82) eine ringförmige, elastische Dichtung mit einem U-förmigen Profil ist.

11. System nach einem der vorstehenden Ansprüche,
**dadurch gekennzeichnet, dass** die Betätigungsvorrichtung (10) eine Trägerplatte (39) aufweist, welche im verbundenen Zustand zwischen einem Abschnitt des Gehäuses (14) und einem Abschnitt der Kartusche (12) axial eingespannt ist.

12. System nach Anspruch 10 in Verbindung mit Anspruch 11,
**dadurch gekennzeichnet, dass** das U-Profil der Dichtung (82) die Trägerplatte (39) randseitig einfasst.

13. System nach Anspruch 12,
**dadurch gekennzeichnet, dass** die Dichtung (82) zusammen mit der Trägerplatte (39) im verbundenen Zustand zwischen dem Abschnitt des Gehäuses (14) und dem Abschnitt der Kartusche (12) axial eingespannt ist.

14. System nach einem der vorstehenden Ansprüche,
**dadurch gekennzeichnet, dass** die Betätigungsvorrichtung (10) einen durch einen geschlossenen Abschnitt einer Wandung des Gehäuse (14) kontaktlos wirkenden Schalter (84) für den Antriebsmotor aufweist.

15. System nach einem der vorstehenden Ansprüche,
**dadurch gekennzeichnet, dass** die Kartusche (12) eine Ausgabeöffnung (47), durch die das viskose Medium aus dem Aufnahmeraum (46) ausgebbar ist, wobei die Ausgabeöffnung mittels eines Rückschlagventils (88) gegen ein Rückströmen des ausgegebenen Mediums gesichert ist.
